# EUROPEAN PATENT APPLICATION

(11) **EP 4 178 154 A1**
(43) Date of publication of application: **10.05.2023**
(21) Application number: 21206438.0
(22) Date of filing: 04.11.2021
(51) Int. Cl.: H04L 9/32, G06F 21/62, G06Q 30/02

(54) **DISTRIBUTED SYSTEM, METHOD, COMPUTER PROGRAM, AND COMPUTER-READABLE MEDIUM DIRECTED TO USER INTERACTION WITH MEDIA CONTENT**

(71) Applicant: Ayozat Holdings Limited, London Greater London W4 5PA (GB)
(72) Inventor: PERERA, Umesh, Douglas Isle of Man, IM2 4HB (GB); BALL, Daniel, Oregon, 97756 (US); THORNTON, Bryant, Oregon, 97756 (US)
(74) Representative: Bird & Bird LLP

(57) **Abstract**

The invention relates to a distributed system (1) comprising a plurality of first nodes (39) and a plurality of second nodes (41), wherein at least one first node (39) of the plurality of first nodes (39) comprises at least one data portion comprising encrypted information related to user interaction with media content of a user (3) of a plurality of users (5), wherein each data portion of the at least one data portion is cryptographically hashed, such that for each data portion a respective hash value is defined based on the content of the respective data portion, wherein at least one second node (41) of the plurality of second nodes (41) comprises a first distributed ledger (21) comprising a first account of the user (3) and at least one non-fungible token, NFT, (25), wherein each NFT (25) of the at least one NFT (25) comprises a hash value defined for a respective data portion of the at least one data portion, and wherein the distributed system (1) further comprises at least one third node (43), wherein the at least one third node (43) comprises a media player (19) adapted to generate the information related to user interaction with media content. The invention further relates to a corresponding method, computer program, and computer-readable medium.

## Description

The invention relates to a distributed system, a method, computer program, and computer-readable medium directed to user interaction with media content.

Systems and methods directed to user interaction with media content are known. For example, a user may consume media content displayed on a display of a portable device of the user, such as a smartphone. The media content may include advertisements, movies, or videogames. The provider of a particular advertisement may be interested in how often the advertisement is viewed by a particular user. Further, the provider of the particular advertisement may be interested whether or how many times the user clicks on a link embedded in the advertisement. Therefore, providers of media content often collect data of users and their interaction with media content, such as the number of views of a particular advertisement by the same user or the number of clicks on a link related to a particular advertisement.

Generally, it is desirable to improve the data security of data comprising information related to user interaction with media content.

Therefore, an object of the present invention is to improve the data security of data comprising information related to user interaction with media content.

According to a first aspect of the present invention, the object is solved by a distributed system comprising the features of claim 1. The distributed system comprises a plurality of first nodes, a plurality of second nodes, and at least one third node. At least one first node of the plurality of first nodes comprises at least one data portion. The at least one data portion comprises encrypted information related to user interaction with media content of a user of a plurality of users. Each data portion of the at least one data portion is cryptographically hashed, such that for each data portion a respective hash value is defined based on the content of the respective data portion. At least one second node of the plurality of second nodes comprises a first distributed ledger. The first distributed ledger comprises a first account of the user and at least one non-fungible token, NFT. Each NFT of the at least one NFT comprises a hash value defined for a respective data portion of the at least one data portion. The at least one third node comprises a media player adapted to generate the information related to user interaction with media content.

The distributed system comprises the plurality of first nodes, the plurality of second nodes, and the at least one third node. The system is a distributed system. The distributed system comprises multiple nodes, such as the first nodes, the second nodes, the third nodes, and may comprise further nodes, such as a plurality of fourth nodes, wherein these nodes communicate with each other, pass messages to each other, and coordinate their tasks. Particularly, each group of nodes, i.e., the group of first node, the group of second nodes, the group of third nodes, and the group of fourth nodes, is adapted to coordinate their tasks. Each of the first nodes, each of the second nodes, each of the third nodes, and each of the fourth nodes may be implemented on different servers. For example, each server may comprise a first node, a second node, a third node, and a fourth node. Alternatively, one server may be provided for each node such that each server comprises either a first node, a second node, a third node, or a fourth node. Preferably, each of the first nodes, each of the second nodes, each of the third nodes, and each of the fourth nodes may be implemented on a different server. Preferably, the system comprises only one third node, which comprises the media player adapted to generate the information related to the user interaction with media content.

The at least one first node of the plurality of first nodes comprises the at least one data portion. Preferably, each first node comprises the at least one data portion. If each first node comprises the at least one data portion, each first node comprises a copy of the same data portion or data portions. If each first node comprises the at least one data portion, the distributed system is very robust against data loss. It is further preferred that at least some of the first nodes comprises the at least one data portion. If at least some of the first nodes comprise the at least one data portion, at least some of the first nodes comprise a copy of the same data portion or data portions. If at least some of the first nodes comprise the at least one data portion, the distributed system is robust against data loss. It is further preferred that only one first node comprises the at least one data portion. If only one first node comprises the at least one data portion, there are no two nodes that comprise a copy of the same data portion or data portions. If only one first node comprises the at least one data portion, particularly little memory space is used. The at least one data portion can comprise one data portion or multiple data portions. Depending on the size of the encrypted information, the encrypted information may form a data portion or may be divided into multiple data portions such that the at least one data portion comprises the encrypted information.

The at least one data portion comprises the encrypted information related to user interaction with media content of the user of the plurality of users. The information relates to user interaction with media content. The media content may include advertisements, movies, or videogames. The user interaction with the media content may include viewing content or clicking on content. The information relating to the user interaction may include the number of views of a particular content or the number of clicks on a link related to a particular content. The information relates to user interaction of a user. Preferably, a plurality of users interacts with the media content. The user is one of the users that interact with the media content. The information relates to the user. Preferably, information related to user interaction with the media content is provided for each user. Features, technical effects and/or advantages described in connection with the user also apply to each user of the users at least in an analogous manner. The information is encrypted. Since the information is encrypted, data security for the user and each user of the distributed system is improved. Preferably, the information is encrypted according to a first coding technology. One data portion or multiple data portions may comprise the encrypted information. In case only one data portion comprises the encrypted information, the data portion comprises the whole encrypted information. In case multiple data portions comprise the encrypted information, the encrypted information is divided into multiple portions of the encrypted information and each portion data portion comprises a respective portion of the encrypted information such that the data portions together comprise the whole encrypted information.

Each data portion of the at least one data portion is cryptographically hashed, such that for each data portion a respective hash value is defined based on the content of the respective data portion. Preferably, each data portion is cryptographically hashed according to a second coding technology which is different from the first coding technology. Since the respective hash value is defined based on the content of the respective data portion, the hash values differ for two data portions of a pair of data portions for each pair of data portions which comprise different contents. For example, the user interacts with media content and data portions are generated comprising encrypted information related to this interaction. Each of the data portions comprising the encrypted information is cryptographically hashed such that for each data portion a respective hash value is defined based on the content of the data portions, e.g., the portions of the encrypted information. Preferably, for each data portion a respective hash value is generated. Since each hash value generated for the data portions is defined based on the content of the data portions, content addressing can be provided by the distributed system. Preferably, in case two hash values are identical, one of the two hash values and the corresponding data portion are disregarded to keep corresponding memory free. Preferably, a hash table comprising the hash values is provided. By cryptographically hashing each data portion, the data security for the user and each user of the distributed system is further improved.

The at least one second node of the plurality of second nodes comprises the first distributed ledger. Preferably, the first distributed ledger is an Ethereum blockchain. It is further preferred that the first distributed ledger is modified by executing a smart contract or multiple smart contracts of the first distributed ledger. Particularly, the first distributed ledger is not necessarily an Ethereum blockchain but may preferably be implemented as any smart contract enabled decentralized software that can be modified by executing a smart contract or multiple smart contracts within its infrastructure.

The first distributed ledger comprises the first account of the user and the at least one non-fungible token, NFT. Preferably, the first distributed ledger comprises a first account for each user. Preferably, the first distributed ledger comprises at least one NFT for each user.

Each NFT of the at least one NFT comprises the hash value defined for the respective data portion of the at least one data portion. Since each NFT comprises the hash value and not the respective data portion itself, data security for the user and each user of the distributed system is further improved. Preferably, each NFT comprises one hash value defined for a respective data portion or multiple hash values, each defined for a respective data portion. Preferably, each NFT corresponds to the data portion or the data portions corresponding to a single user interaction with media content of the user.

The at least one third node comprises the media player adapted to generate the information related to user interaction with media content. Preferably, the media player is adapted to provide the media content consumed by the user or each user of the system. Further, the media player is preferably adapted to monitor the user interaction with the media content of the particular user. Preferably, if a new user registers with the distributed system, a unique user ID is generated for the user. Preferably, the unique user ID is forwarded to the media player. Preferably, the media player employs the unique user IDs to allocate consumed media content and user interaction with the media content to a particular user. It is further preferred that the media player is adapted to forward the information related to user interaction to a first server of the distributed system, each first node, each second node, and preferably each fourth node. Preferably, the distributed system comprises a single third node. It is further preferred that the distributed system comprises multiple third nodes, wherein each third node comprises a copy of the media player.

In summary, the data security of data comprising information related to user interaction with media content is improve by the distributed system.

According to a preferred embodiment of the distributed system, the first distributed ledger comprises an indication of ownership for each NFT of the at least one NFT, wherein the indication of ownership for the NFT which comprises the hash value defined for the data portion comprising the encrypted information related to user interaction with media content of the user indicates that the NFT is owned by the first account of the user. The indication of ownership allows to allocate each NFT to a particular first account of a user, and, therefore to the particular user. Further, since the indication of ownership allows to allocate each NFT to a particular user, the ownership of each NFT of a particular user can be transferred to another party or user by transferring the NFT or the NFTs to the party's or user's first account, which provides a simple and secure way to transfer the rights to the encrypted information related to user interaction with media content between different parties.

According to a preferred embodiment of the distributed system, each data portion of the at least one data portion is a data portion a user of the plurality of users agrees that the at least one first node comprises this data portion. Particularly, each data portion of the at least one data portion is a data portion comprising the information for which the consent is given by the respective user who interacted with the media content. Particularly, the consent is given by the respective user that this information is further employed by the distributed system. The information may only further be employed by the distributed system in case consent is given by the user, which improves data security for the user. Preferably, if information is further employed by the distributed system, the information is encrypted according to the first coding technology, the at least one data portion is generated, the at least one data portion is sent to each first node, the at least one data portion is cryptographically hashed according to the second coding technology and/or the NFT is generated or modified to include the corresponding hash value in the first distributed ledger.

According to a preferred embodiment of the distributed system, the first account of the user receives a first token or a portion of the first token for each user interaction with media content of the user. Since the first account of the user receives a first token or a portion of the first token, in case the user interacts with media content, the user is encouraged to interact with media content. Particularly, the first distributed ledger comprises an indication of ownership for each first token or for each portion of the first token, wherein the indication of ownership for each first token or for each portion of the first token indicates that the first token or the portion of the first token is owned by the first account of a particular user. Each first token can also be regarded as a transaction token.

According to a preferred embodiment of the distributed system, the distributed system further comprises a plurality of fourth nodes, wherein at least one fourth node of the plurality of fourth nodes comprises a second distributed ledger comprising a second account of the user, wherein the second account of the user receives a second token or a portion of the second token for each data portion the user agrees that the at least one first node of the plurality of first nodes comprises this data portion. Since the second account of the user receives a second token or a portion of the second token for each data portion the user agrees that the at least one first node of the plurality of first nodes comprises this data portion, the user is encouraged to give consent to the use of this data. Preferably, if a user agrees that an information may be further employed by the distributed system, the second account of that user receives a second token or a portion of the second token. Since the second account of a user receives a second token or a portion of the second token in case the user agrees that an information may be further employed by the distributed system, each user is encouraged to agree that information related to the activity of the user is further employed by the distributed system. Preferably, the second distributed ledger is a Binance Smart Chain. It is further preferred that the second distributed ledger is modified by executing a smart contract or multiple smart contracts of the second distributed ledger. Preferably, the second distributed ledger comprises a second account for each user. Preferably, the second distributed ledger comprises a plurality of second tokens. Particularly, the second distributed ledger comprises an indication of ownership for each second token or for each portion of the second token, wherein the indication of ownership for each second token or for each portion of the second token indicates that the second token or the portion of the second token is owned by the second account of a particular user. Each second token can also be regarded as a QUID token.

According to a preferred embodiment of the distributed system, each first node of the plurality of first nodes comprises a distributed hash table comprising hash values, each defined for a particular data portion, and, for each hash value, at least one identifier of a plurality of identifiers, wherein each identifier is assigned to a first node. The hash table can also be regarded as a distributed hash table. The hash table provides a mapping of hash values and identifiers, wherein each identifier is an identifier of a first node that comprises the data portion for which the corresponding hash value is defined. A second server of the distributed system may comprise one of the first nodes. Each of the first nodes may be an InterPlanetary File System, IPFS, node.

According to a second aspect of the present invention, the object is also solved by a method comprising the features of claim 7. The method comprises the following steps: generating, by a media player, information related to user interaction with media content of a user of a plurality of users; encrypting the information; generating at least one data portion comprising the encrypted information; cryptographically hashing each data portion of the at least one data portion, such that for each data portion a respective hash value is defined based on the content of the respective data portion; and generating a first distributed ledger comprising a first account of the user and at least one non-fungible token, NFT, wherein each NFT of the at least one NFT comprises a hash value defined for a respective data portion of the at least one data portion. The features, technical effects and/or advantages described in connection with the first aspect of the invention also apply to the second aspect of the invention at least in an analogous manner, so that no corresponding repetition is made here. Even though the method steps are described in a certain order, the present invention is not restricted to this order. Rather, the individual method steps can be carried out in any meaningful sequence.

According to a third aspect of the present invention, the object is also solved by a computer program comprising the features of claim 8. The computer program comprises instructions which, when the program is executed by a computer, cause the computer to carry out the steps of the method of the second aspect of the present invention. Preferably, the computer program can comprise multiple portions or multiple copies of the computer program can be provided such that each of the portions or each of the copies can be executed by a corresponding node of the first nodes, the second nodes, the third nodes, or the fourth nodes. When the program is executed by each of the nodes simultaneously, the computer carries out the steps of the method of the second aspect of the present invention. The features, technical effects and/or advantages described in connection with the first aspect of the invention and in connection with the second aspect of the invention also apply to the third aspect of the invention at least in an analogous manner, so that no corresponding repetition is made here.

According to a fourth aspect of the present invention, the object is also solved by a computer-readable medium comprising the features of claim 9. The computer-readable medium comprises instruction which, when executed by a computer, cause the computer to carry out the steps of the method of the second aspect of the present invention. The features, technical effects and/or advantages described in connection with the first aspect of the invention, in connection with the second aspect of the invention, and in connection with the third aspect of the invention also apply to the fourth aspect of the invention at least in an analogous manner, so that no corresponding repetition is made here.

Further features, advantages and application possibilities of the present invention may be derived from the following description of exemplary embodiments and/or the figures. Thereby, all described and/or visually depicted features for themselves and/or in any combination may form an advantageous subject matter and/or features of the present invention independent of their combination in the individual claims or their dependencies. Furthermore, in the figures, same reference signs may indicate same or similar objects.
- Figure 1: schematically shows an embodiment of a distributed system according to the present invention.
- Figure 2: schematically shows the embodiment of the distributed system of figure 1.

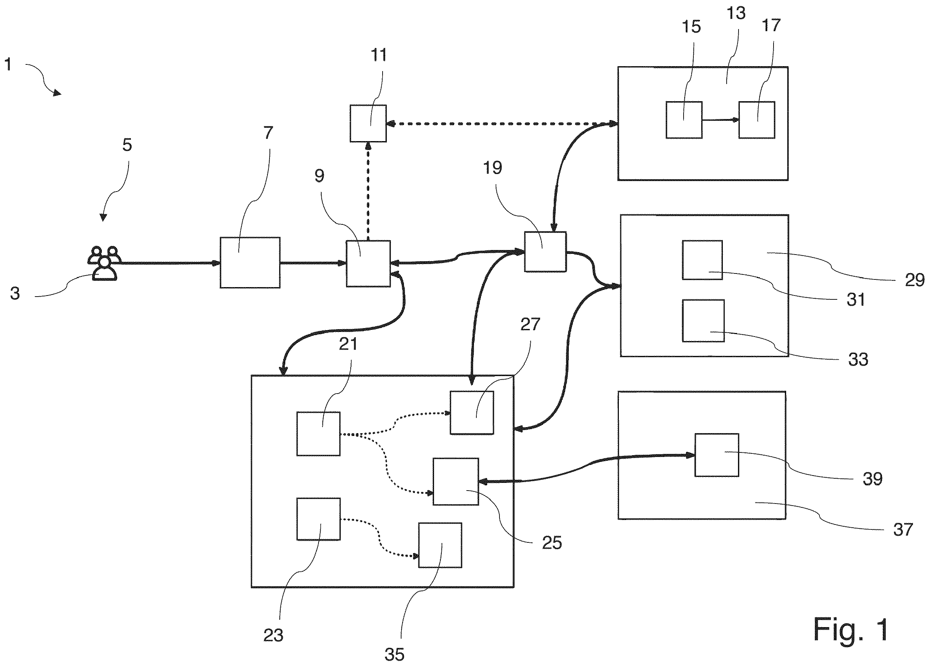

Figure 1 schematically shows an embodiment of a distributed system 1 according to the present invention. A user 3 of a plurality of users 5 and each of the users 5 may interact with the distributed system 1. Particularly, the user 3 may consume media content provided by the distributed system 1, e.g., media content displayed on a display of a portable device of the user 3, such as a smartphone of the user 3. Similarly, each of the users 5 may consume media content provided by the distributed system 1, e.g., media content displayed on a display of a respective portable device of each respective user, such as a smartphone of that user. When the user 3 or each of the users 5 visits the streaming site 7, i.e., streaming website, for the first time, the user 3 or each of the users 5 may be regarded as a new user. The user 3 and each of the users 5 can consume media content provided by the streaming site 7 and displayed on the display of a respective device of the respective user. The user 3 and each of the users 5 can consume a first portion of the media content without registering on the streaming site7 and without generating a user profile. The user 3 and each of the users 5 can consume a second portion of the media content only after they have registered on the streaming site7 and a user profile has been generated for the particular user. The user 3 and each of the users 5 can each decide to register on the streaming site 7 and can each decide that a respective user profile is generated for each particular user. Particularly, the user 3 can visit the streaming site 7 for the first time, consume the first portion of the media content, register on the streaming site 7, and consume the second portion of the media content after the registration. The user profile for each user can comprise the name of the user, the date of birth of the user, a photo of the user, and/or a unique user ID. In figure 1, the registration on the streaming site 7 is labelled with reference sign 9.

When the user 3 or any of the users 5 registers on the streaming site 7, an API, application programming interface, request 11 comprising the unique user ID of the respective user is sent to a first server 13 of the distributed system 1 and a user record 15 is generated for the particular user and stored on the first server 13. Further, a user data set 17 is generated for the particular user and stored on the first server 13. The user data set 17 may comprise a MySQL table configured to store information related to user interaction with media content of the particular user generated by a media player 19. In case multiple users 5 register on the streaming site 7, for each user an API request 11 comprising the unique user ID of the respective user is sent to the first server 13 and a user record 15 is generated for the particular user and stored on the first server 13. Further, a user data set 17 is generated for each of the users 5 and stored on the first server 13. The user data set 17 of each user 5 may comprise a MySQL table configured to store information related to user interaction with media content of the particular user generated by the media player 19.

The unique user ID resulting from the registration 9 of a particular user is also forwarded to the media player 19, such that the media player 19 can monitor the media content consumed by a particular user and can monitor the user interaction with the media content of the particular user. The media player 19 is adapted to generate the information related to user interaction with media content for each of the registered users 5 and to forward the information to the first server 13.

Further, when the user 3 or any of the users 5 registers on the streaming site 7, labelled with reference sign 9, a first distributed ledger 21 and a second distributed ledger 23 is generated or modified. The first distributed ledger 21 may be an Ethereum distributed ledger. The second distributed ledger 23 may be a Binance Smart Chain. When the user 3 registers on the streaming site 7, the first distributed ledger 21 is generated or modified such that the first distributed ledger 21 comprises a first account of the user 3, at least one non-fungible token, NFT, 25 for the user 3, and an indication of ownership for each NFT 25 for the user 3 indicating that the NFT 25 is owned by the first account of the user 3. Further, when the user 3 registers on the streaming site 7, the second distributed ledger 23 is generated or modified such that the second distributed ledger 23 comprises a second account of the user 3. Similarly, when any particular user of the users 5 registers on the streaming site 7, the first distributed ledger 21 is generated or modified such that the first distributed ledger 21 comprises a first account of the particular user, at least one NFT 25 for the particular user, and an indication of ownership for each NFT 25 for the particular user indicating that the NFT 25 is owned by the first account of the particular user. Further, when the particular user registers on the streaming site 7, the second distributed ledger 23 is generated or modified such that the second distributed ledger 23 comprises a second account of the particular user 3.

As already described, the media player 19 is adapted to generate the information related to user interaction with media content for each of the registered users 5. Each time a registered user 5 interacts with media content provided by the distributed system 1, information related to the interaction is generated and encrypted according to a first coding technology. For example, if the user 3 is registered and the user 3 interacts with media content provided by the distributed system 1, information related to this interaction is generated and encrypted according to the first coding technology resulting in encrypted information related to the user interaction with the media content of the user 3. Depending on the size of the encrypted information, the encrypted information may form a data portion or may be divided into multiple data portions such that the at least one data portion comprises the encrypted information. Preferably, in case multiple data portions are provided, each data portion is different from the other data portions such that no two data portions are identical to keep corresponding memory free. The content of each data portion comprises the encrypted information or a portion of the encrypted information. Since the information is encrypted, data security for each user of the distributed system 1 is improved.

Each data portion of the at least one data portion is cryptographically hashed, particularly according to a second coding technology which is different from the first coding technology, such that for each data portion a respective hash value is defined based on the content of the respective data portion. Since the respective hash value is defined based on the content of the respective data portion, the hash values differ for two data portions of a pair of data portions for each pair of data portions which comprise different contents. For example, the user 3 interacts with media content and data portions are generated comprising encrypted information related to this interaction. Each of the data portions comprising the encrypted information is cryptographically hashed such that for each data portion a respective hash value is defined based on the content, i.e., the portions of the encrypted information, of the data portions. Therefore, for each data portion a respective hash value is generated. Since each hash value generated for the data portions is defined based on the content, content addressing can be provided by the distributed system 1. Preferably, in case two hash values are identical, one of the two hash values and the corresponding data portion are disregarded to keep corresponding memory free. Preferably, a hash table comprising the hash values is provided. Each NFT 25 of the at least one NFT 25 comprises a hash value defined for a respective data portion. For example, each NFT 25 which is owned by the first account of the user 3 comprises at least one hash value for a respective data portion. Preferably, each NFT 25 comprises one hash value defined for a respective data portion or multiple hash values, each defined for a respective data portion, wherein the data portion or the data portions correspond to a single user interaction with media content of the user 3. Since each NFT 25 comprises a hash value or multiple hash values and not the encrypted information related to user interaction with media content itself, data security for each user of the distributed system 1 is further improved. Preferably, for each interaction with media content of the user 3, a new NFT 25 is generated and the first distributed ledger 21 is modified to comprise the new NFT 25 and an indication of ownership for the new NFT 25, wherein the indication of ownership for the new NFT 25 indicates that the new NFT 25 is owned by the first account of the user 3. Similarly, for each user of the users 5, each NFT 25 which is owned by the first account of a particular user comprises at least one hash value for a respective data portion. Preferably, each NFT 25 comprises one hash value defined for a respective data portion or multiple hash values, each defined for a respective data portion, wherein the data portion or the data portions correspond to a single user interaction with media content of the particular user. Preferably, for each interaction with media content of the particular user, a new NFT 25 is generated and the first distributed ledger 21 is modified to comprise the new NFT 25 and an indication of ownership for the new NFT 25, wherein the indication of ownership for the new NFT 25 indicates that the new NFT 25 is owned by the first account of the particular user.

Further, the first distributed ledger 21 comprises a plurality of first tokens 27. The first account of the user 3 receives a first token 27 or a portion of the first token 27 for each user interaction with media content of the user 3. Similarly, the first account of a particular user receives a first token 27 or a portion of the first token 27 for each user interaction with media content of that particular user. Therefore, if a user interacts with media content, the first account of that user receives a first token 27 or a portion of the first token 27. Since the first account of a user receives a first token 27 or a portion of the first token 27, in case the user interacts with media content, each user is encouraged to interact with media content. Particularly, the first distributed ledger 21 comprises an indication of ownership for each first token 27 or for each portion of the first token 27, wherein the indication of ownership for each first token 27 or for each portion of the first token 27 indicates that the first token 27 or the portion of the first token 27 is owned by the first account of a particular user. Each first token 27 can also be regarded as a transaction token.

Further, the distributed system comprises a first computer program 29 adapted to receive the information related to user interaction with media content of a particular user generated by the media player 19. For example, the first computer program 29 may be executed by a portable device of the particular user, such as a smartphone of the particular user, which is employed by the particular user to consume media content provided by the distributed system 1, e.g., media content displayed on a display of the portable device of the particular user. The first computer program 29 comprises a first component 31, which may be adapted to form or comprise a mobile app. Further, the first computer program 29 comprises a second component 33, which may be adapted to form or comprise a browser plugin.

Particularly, the first component 31 is adapted to receive the information related to user interaction with media content of a particular user generated by the media player 19. If a registered user interacts with media content and the first component 31 is executed by a device of the registered user, the device of the user displays information relating to the information related to this user interaction with the media content and displays a first option for the user to select in case the user agrees that the information related to this user interaction is sent for encryption, generation of at least one data portion, cryptographically hashing the at least one data portion, such that for each data portion a respective hash value is defined based on the content of the respective data portion, and generating or modifying a respective NFT 25 or multiple NFTs 25 to comprise the respective hash value or hash values. Further, if the registered user interacts with media content and the first component 31 is executed by the device of the registered user, the device of the user displays information relating to the information related to this user interaction with the media content and displays a second option for the user to select in case the user does not agree that the information related to this user interaction is sent for encryption, generation of at least one data portion, cryptographically hashing the at least one data portion, such that for each data portion a respective hash value is defined based on the content of the respective data portion, and generating or modifying a respective NFT 25 or multiple NFTs 25 to comprise the respective hash value or hash values.

It is further preferred that the second component 33 is adapted to receive information related to browsing behavior of a particular user generated by a browser executed by the device of the user. If a registered user interacts with the browser and the second component 33 is executed by the device of the registered user, the device of the user displays information relating to the browsing behavior and displays a first option for the user to select in case the user agrees that the information related to this browsing behavior is sent for encryption, generation of at least one data portion, cryptographically hashing the at least one data portion, such that for each data portion a respective hash value is defined based on the content of the respective data portion, and generating or modifying a respective NFT 25 or multiple NFTs 25 to comprise the respective hash value or hash values. Further, if the registered user interacts with the browser and the second component 33 is executed by the device of the registered user, the device of the user displays information relating to the browsing behavior and displays a second option for the user to select in case the user does not agree that the information related to this browsing behavior is sent for encryption, generation of at least one data portion, cryptographically hashing the at least one data portion, such that for each data portion a respective hash value is defined based on the content of the respective data portion, and generating or modifying a respective NFT 25 or multiple NFTs 25 to comprise the respective hash value or hash values.

Therefore, by employing the first component 31 and/or the second component 33, each user can select the first option or the second option depending on whether the user agrees that particular information may further be employed by the distributed system 1. Particularly, each data portion of the at least one data portion is a data portion comprising the information for which the consent is given by the respective user who interacted with the media content. Particularly, the consent is given by the respective user that this information is further employed by the distributed system 1. Therefore, information may only further be employed by the distributed system 1 in case consent is given by the user, which improves data security for the user.

Further, the second distributed ledger 23 comprises a plurality of second tokens 35. The second account of the user 3 receives a second token 35 or a portion of the second token 35 for each data portion the user 3 agrees that the information contained in the data portion is further employed by the distributed system 1. Similarly, the second account of a particular user receives a second token 35 or a portion of the second token 35 for each data portion the particular user agrees that the information contained in the data portion is further employed by the distributed system 1. Therefore, if a user agrees that an information may be further employed by the distributed system 1, the second account of that user receives a second token 35 or a portion of the second token 35. Since the second account of a user receives a second token 35 or a portion of the second token 35 in case the user agrees that an information may be further employed by the distributed system 1, each user is encouraged to agree that information related to the activity of the user is further employed by the distributed system 1. Particularly, the second distributed ledger 23 comprises an indication of ownership for each second token 35 or for each portion of the second token 35, wherein the indication of ownership for each second token 35 or for each portion of the second token 35 indicates that the second token 35 or the portion of the second token 35 is owned by the second account of a particular user. Each second token 35 can also be regarded as a QUID token.

The distributed system 1 comprises a second server 37. The second server 37 comprises the at least one data portion comprising encrypted information related to user interaction with media content of the user 3 of a plurality of users 5. Particularly, the second server 37 comprises a first node 39 which comprises the at least one data portion. Each data portion of the at least one data portion is a data portion the user 3 or any of the users 5 agrees that the at least one first node 39 comprises this data portion.

Preferably, the distributed system 1 comprises a second computer program which is adapted to receive particular information from the media player 19 and/or the first computer program 29 in case the consent is given by a user with respect to this particular information. The second computer program is adapted to generate or modify the first distributed ledger 21 and the second distributed ledger 23, to encrypt the information related to user interaction with media content according to the first coding technology, generate the at least one data portion, send the at least one data portion to the first node 39, cryptographically hash the at least one data portion according to the second coding technology and generate or modify the NFTs 25 to include the corresponding hash values in the first distributed ledger 21.

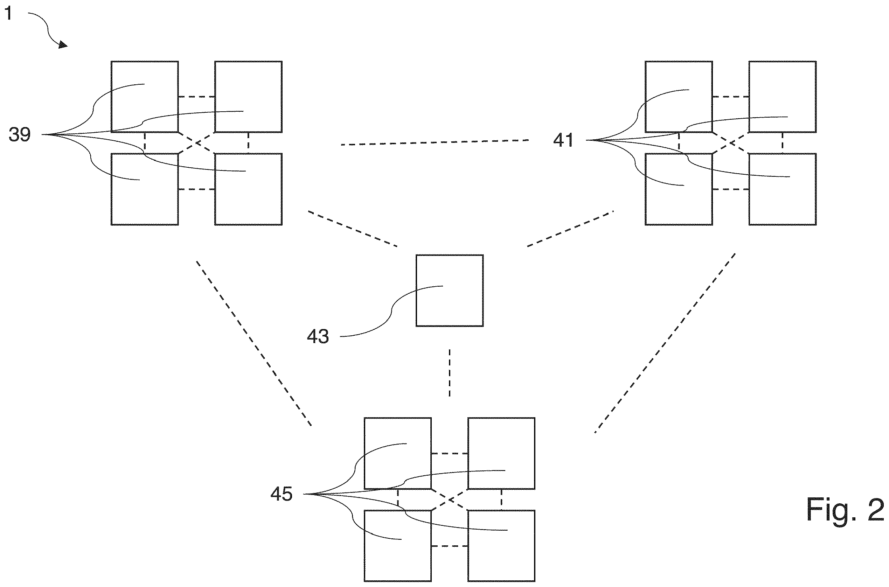

Figure 2 schematically shows the embodiment of the distributed system 1 of figure 1. The distributed system 1 comprises a plurality of first nodes 39, a plurality of second nodes 41, a third node 43, and a plurality of fourth nodes 45. Each of the first nodes 39, each of the second nodes 41, the third node 43, and each of the fourth nodes 45 maybe implemented on different servers. For example, each server may comprise a first node 39, a second node 41, and a fourth node 45. In this case, a further server may be provided to comprise the third node 43. Alternatively, one server may be provided for each node such that each server comprises either a first node 39, a second node 41, a third node 43, or a fourth node 45, i.e., each of the first nodes 39, each of the second nodes 41, the third node 43, and each of the fourth nodes 45 may be implemented on a different server. The first nodes 39, the second nodes 41, the third node 43, and the fourth nodes 45 communicate with each other, pass messages to each other, and coordinate their tasks, illustrated by the dashed lines in figure 2.

Each of the first nodes 39 comprises at least one data portion comprising encrypted information related to user interaction with media content of a user. Preferably, each data portion of the data portions is a unique data portion, such that for each pair of data portions the contents of the data portions are different. Preferably, in case two data portions are identical, one of the two data portions is disregarded to keep corresponding memory free. Preferably, different first nodes 39 comprises different data portions such that the usage of memory for all first nodes 39 is kept at a minimum. Each data portion is a data portion a user of the plurality of users 5 agrees that one of the first nodes 39 comprises this data portion. Therefore, the first nodes 39 comprise only data portions for which a consent of a user exists that these data portions can be further employed by the distributed system 1. Each first node 39 of the plurality of first nodes 39 comprises a copy of the hash table, which can also be regarded as a distributed hash table, comprising the hash values, each defined for a particular data portion. Further, the hash table comprises for each hash value at least one identifier of a plurality of identifiers, wherein each identifier is assigned to a first node 39. The hash table provides a mapping of hash values and identifiers, wherein each identifier is an identifier of a first node 39 that comprises the data portion for which the corresponding hash value is defined. The second server 39 shown in figure 1 comprises one of the first nodes 39. Each of the first nodes 39 may be an IPFS node.

The first distributed ledger 21 comprises the first accounts of the users, the NFTs 25, each comprising a hash value defined for a respective data portion, and the indications of ownership for each NFT 25. Further, the first distributed ledger 21 comprises the first tokens 27 or the portions of the first tokens 27, and the indications of ownership for each first token 27 or for each portion of the first token 27. The third node 43 comprises the media player 19 adapted to generate the information related to user interaction with media content. The second distributed ledger 23 comprises the second accounts of the users, the second tokens 35 or the portions of the second tokens 35.

The distributed system 1 is particularly adapted to perform a method comprising the following steps: generating, by a media player 19, information related to user interaction with media content of a user 3 of a plurality of users 5; encrypting the information; generating at least one data portion comprising the encrypted information; cryptographically hashing each data portion of the at least one data portion, such that for each data portion a respective hash value is defined based on the content of the respective data portion; and generating a first distributed ledger 21 comprising a first account of the user 3 and at least one non-fungible token, NFT, 25, wherein each NFT 25 of the at least one NFT 25 comprises a hash value defined for a respective data portion of the at least one data portion.

In summary, the distributed system 1 improves data security for each user of the distributed system 1, since the information related to user interaction with media content generated by the media player is encrypted and hash values based on the encrypted information are provided in a distributed ledger which protects the data from manipulation. Further, only information is included in the data portions to which a user who the information relates to has expressed his/her consent which further improves the data security for the user. Further, the NFT 25 or the NFTs 25 of a particular user can be transferred to another party's or user's first account making the other party or user the owner of the NFT 25 or the NFTs 25 providing a simple and secure way to transfer the rights to the data between different parties.

It is additionally pointed out that "comprising" does not rule out other elements, and "a" or "an" does not rule out a multiplicity. It is also pointed out that features that have been described with reference to one of the above exemplary embodiments may also be disclosed as in combination with other features of other exemplary embodiments described above. Reference signs in the claims are not to be regarded as restrictive.

### REFERENCE SIGNS

- 1: distributed system
- 3: user
- 5: plurality of users
- 7: streaming site
- 9: registration
- 11: API request
- 13: first server
- 15: user record
- 17: user data set
- 19: media player
- 21: first distributed ledger
- 23: second distributed ledger
- 25: non-fungible token, NFT
- 27: first token
- 29: first computer program
- 31: first component
- 33: second component
- 35: second token
- 37: second server
- 39: first node
- 41: second node
- 43: third node
- 45: fourth node

## Claims

1. Distributed system (1) comprising a plurality of first nodes (39), a plurality of second nodes (41), and at least one third node (43),
wherein at least one first node (39) of the plurality of first nodes (39) comprises at least one data portion comprising encrypted information related to user interaction with media content of a user (3) of a plurality of users (5),
wherein each data portion of the at least one data portion is cryptographically hashed, such that for each data portion a respective hash value is defined based on the content of the respective data portion,
wherein at least one second node (41) of the plurality of second nodes (41) comprises a first distributed ledger (21) comprising a first account of the user (3) and at least one non-fungible token, NFT, (25), wherein each NFT (25) of the at least one NFT (25) comprises a hash value defined for a respective data portion of the at least one data portion, and
wherein the at least one third node (43) comprises a media player (19) adapted to generate the information related to user interaction with media content.

2. Distributed system (1) according to the preceding claim, wherein the first distributed ledger (21) comprises an indication of ownership for each NFT (25) of the at least one NFT (25), wherein the indication of ownership for the NFT (25) which comprises the hash value defined for the data portion comprising the encrypted information related to user interaction with media content of the user (3) indicates that the NFT (25) is owned by the first account of the user (3).

3. Distributed system (1) according to one of the preceding claims, wherein each data portion of the at least one data portion is a data portion a user (3) of the plurality of users (5) agrees that the at least one first node (39) comprises this data portion.

4. Distributed system (1) according to one of the preceding claims, wherein the first account of the user (3) receives a first token (27) or a portion of the first token (27) for each user interaction with media content of the user (3).

5. Distributed system (1) according to one of the preceding claims, wherein the distributed system further comprises at least one fourth node (45), wherein the at least one fourth node (45) comprises a second distributed ledger (23) comprising a second account of the user (3), wherein the second account of the user (3) receives a second token (35) or a portion of the second token (35) for each data portion the user (3) agrees that the at least one first node (39) of the plurality of first nodes (39) comprises this data portion.

6. Distributed system (1) according to one of the preceding claims, wherein each first node (39) of the plurality of first nodes (39) comprises a distributed hash table comprising hash values, each defined for a particular data portion, and, for each hash value, at least one identifier of a plurality of identifiers, wherein each identifier is assigned to a first node (39).

7. Method comprising the following steps:
generating, by a media player (19), information related to user interaction with media content of a user (3) of a plurality of users (5);
encrypting the information;
generating at least one data portion comprising the encrypted information;
cryptographically hashing each data portion of the at least one data portion, such that for each data portion a respective hash value is defined based on the content of the respective data portion; and
generating a first distributed ledger (21) comprising a first account of the user (3) and at least one non-fungible token, NFT, (25), wherein each NFT (25) of the at least one NFT (25) comprises a hash value defined for a respective data portion of the at least one data portion.

8. Computer program comprising instructions which, when the program is executed by a computer, cause the computer to carry out the steps of the method of claim 7.

9. Computer-readable medium comprising instruction which, when executed by a computer, cause the computer to carry out the steps of the method of claim 7.
